# EUROPÄISCHE PATENTSCHRIFT

(11) **EP 2 174 819 B1**
(45) Veröffentlichungstag und Bekanntmachung des Hinweises auf die Patenterteilung: **16.05.2012**
(21) Anmeldenummer: 09450181.4
(22) Anmeldetag: 24.09.2009
(51) Int. Cl.: B60K 15/067, B60K 15/077, B60K 15/03

(54) **Verbindungselement für Fahrzeugtanksegmente**
Connecting element for vehicle tank segments
Elément de liaison pour segments d'un réservoir de véhicule

(30) Priorität: 10.10.2008 AT 5782008 U
(43) Veröffentlichungstag der Anmeldung: 14.04.2010
(73) Patentinhaber: Alutech Gesellschaft m.b.H., 5651 Lend (AT)
(72) Erfinder: Tevini, Gerhard, 5700 Zell am Zee (AT); Lind, Christoph, 8200 Gleisdorf (AT); Wasle, Gregor, 6600 Reutte (AT)
(74) Vertreter: Weiser, Andreas

(56) Entgegenhaltungen:
- EP-A1- 0 799 739
- EP-A1- 0 872 372
- DE-A1-102005 050 803
- DE-A1-102006 021 710
- DE-U1-202005 021 122

## Beschreibung

Die vorliegende Erfindung betrifft ein Verbindungselement für Mantelsegmente eines Fahrzeugtanks, mit einem reifenförmigen Umfangsteil. Die Erfindung betrifft ferner einen Fahrzeugtank, der mit zumindest einem solchen Verbindungselement versehen ist.

Ein aus der EP 0 872 372 A1 bekanntes Verbindungselement dieser Art hat einen Umfangsteil, der mit einer stirnseitigen Umfangsnut versehen ist, um darin ein Mantelsegment aus dünnwandigem Metallblech einschieben und festkleben zu können.

Bei den bekannten Konstruktionen ergibt sich das Problem, daß an der Verbindungsstelle zwischen dem dünnwandigen Tankmantel und dem starren Verbindungselement bei Vibrationen des Fahrzeugs hohe Biegebeanspruchungen auftreten, die zu Materialermüdung und einem Bruch bzw. Zerreißen des Tankmantels an dieser Stelle führen können.

Die Erfindung setzt sich zum Ziel, ein Verbindungselement der eingangs genannten Art zu schaffen, welches die genannten Nachteile überwindet und hohe Stabilität hat, um den Aufbau großvolumiger Fahrzeugtanks, wie Kraftstofftanks für einen Lastkraftwagen, zu ermöglichen. Dieses Ziel wird mit einem Verbindungselement der einleitend genannten Art erreicht, das sich gemäß der Erfindung dadurch auszeichnet, daß der Umfangsteil auf beiden Stirnseiten mit jeweils einer umlaufenden Nut zum Einstecken der Mantelsegmente versehen ist, und daß zumindest eine Seitenwand jeder Nut in einen fortschreitend lockereren Sitz für ihr Mantelsegment ausläuft. Dadurch ergibt sich ein abnehmendes Widerstandsmoment des Verbindungselements zu seinen beiden Stirnseiten hin, sodaß es dort zunehmend flexibler, "weicher" oder zumindest lockerer wird und damit Bewegungen der Mantelsegmente umso mehr zuläßt, je weiter man sich von der Verbindungsstelle entfernt. Im Ergebnis ist die Gefahr eines Brechens oder Zerreißens der Mantelsegmente wesentlich reduziert.

In einer ersten bevorzugten Ausführungsform wird die Lockerung des Sitzes erreicht, indem die Wanddicke der radial außenliegenden Seitenwand jeder Nut zu ihrem Ende hin fortschreitend abnimmt, sodaß die Seitenwand gleichsam fortschreitend elastischer wird.

In einer zweiten bevorzugten Ausführungsform, welche zusätzlich oder alternativ zur ersten eingesetzt werden kann, wird die Lockerung des Sitzes erreicht, indem die radial außenliegende Seitenwand jeder Nut zu ihrem Ende hin fortschreitend zurückweicht, sodaß sich ein fortschreitend größerer Spalt zwischen Seitenwand und Mantelsegment öffnet.

In jedem Fall ist es besonders günstig, wenn zumindest der Umfangsteil des Verbindungselements ein Guß-, Schmiede- oder Strangpreßteil ist, bevorzugt aus Aluminium, wodurch hohe Steifigkeit bei geringem Gewicht erreicht werden kann. Diese Ausführungsform eignet sich darüber hinaus besonders für Fahrzeugtanks aus Aluminiumblech, weil sie die Gefahr einer Kontaktkorrosion zwischen den Mantelsegmenten und dem Verbindungselement hintanhält.

Gemäß einer weiteren bevorzugten Ausführungsform kann vorgesehen werden, daß die beiden Nuten unterschiedliche Breite und/oder Tiefe haben, sodaß auch Mantelsegmente unterschiedlicher Wandstärken miteinander verbunden werden können.

Besonders günstig ist es, wenn der Umfangsteil im Schnitt gesehen etwa T-Profil hat. Dadurch ergibt sich ein besonders steifes Verbindungselement, das auch zum Aufbau großvolumiger Fahrzeugtanks geeignet ist.

Dabei nimmt bevorzugt die Stegdicke des Mittelstegs des T-Profils nach außen hin zu und läuft rund in die Schenkel des T-Profils aus. Dies ergibt eine optimale Kräfteverteilung mit minimalem Materialeinsatz und entsprechender Gewichtseinsparung.

Zusätzlich kann das T-Profil mit Verstärkungsrippen ausgesteift sein, wodurch eine weitere Querschnittsverringerung des T-Profils bei gleichbleibender Festigkeit möglich ist.

In einer weiteren vorteilhaften Ausführungsform der Erfindung umfaßt das Verbindungselement einen Wandteil, der in die zentrale Öffnung des Umfangsteils eingesetzt ist. Dadurch kann das Verbindungselement gleichzeitig als Trenn- oder Schwallwand im Tank dienen.

Dabei ist es besonders günstig, wenn ein Umfangsteil mit T-Profil verwendet wird und der Wandteil an den Mittelsteg des T-Profils anschließt. Dadurch liegt der Wandteil mittig zum Umfangsteil bzw. kragt der Umfangsteil symmetrisch zu beiden Seiten des Innenteils aus, was zu einer wesentlich besseren Krafteinleitung und zu einer Minimierung der Biegebeanspruchungen zwischen Umfangsteil und Wandteil führt.

Die Wanddicke des Wandteils nimmt bevorzugt nach innen hin ab. Dadurch kann nochmals eine Gewichtsreduktion ohne Beeinträchtigung der Festigkeit erzielt werden.

In einer bevorzugten Ausführungsform ist der Wandteil als gesonderter Teil ausgeführt und mit seinem Außenbereich in den Umfangsteil eingebettet oder mit dem Umfangsteil vernietet, verschraubt, verschweißt, verclincht oder verklebt, beispielsweise wenn der Wandteil aus einem kostengünstigeren Tiefziehblech oder anderem Material, z.B. Kunststoff als der Umfangsteil gefertigt werden soll.

Gemäß einer alternativen bevorzugten Ausführungsform ist der Wandteil mit dem Umfangsteil einstückig. Das gesamte Verbindungselement kann somit bevorzugt als ein Gußteil, z.B. ein Aluminiumdruckgußteil, gefertigt werden.

Ein Verbindungselement mit Wandteil kann sowohl eine Trennwand als auch eine Schwallwand bilden, in welch letzterem Fall der Wandteil und bevorzugt auch der Umfangsteil mit Durchbrechungen versehen sind.

Gemäß noch einer weiteren bevorzugten Ausführungsform der Erfindung wird vorgesehen, daß der Umfangsteil an zumindest einer Stelle seines Außenumfangs mit einer Verankerung zur Montage an einem Fahrzeugrahmen ausgestattet ist.

Bevorzugt ist die Verankerung eine einstückig angegossene Schraubplatte, was eine einfache und stabilere Variante ist.

Alternativ ist die Verankerung bevorzugt eine einstückig angegossenes Hakenprofil, welches in ein komplementäres Hakenprofil des Fahrzeugrahmens einhängbar ist. Dadurch kann der gesamte Fahrzeugtank einfach in eine entsprechende Haltung des Fahrzeugrahmens eingehängt werden, was die Montage wesentlich erleichtert.

Besonders vorteilhaft ist es, wenn die Verankerung sich mittels einer nach unten verjüngten Versteifungsrippe am Umfangsteil abstützt, wodurch eine gleichmäßige Krafteinleitung ohne punktuelle Überbeanspruchungen erreicht werden kann.

In einem weiteren Aspekt schafft die Erfindung auch einen Fahrzeugtank mit zumindest zwei Mantelsegmenten, der sich durch zumindest ein Verbindungselement der vorgestellten Art auszeichnet, in dessen Nuten die Mantelsegmente eingesetzt sind, bevorzugt eingeklebt.

Die Erfindung wird nachstehend anhand von in den beigeschlossenen Zeichnungen dargestellten Ausführungsbeispielen näher erläutert. In den Zeichnungen zeigen:
die Fig. 1 bis 3 das Verbindungselement der Erfindung in der Perspektivansicht, im Halbschnitt und in einem vergrößertem Teilschnitt;
die Fig. 4 und 5 zwei Varianten der Verbindung zwischen dem Wandteil und dem Umfangsteil des erfindungsgemäßen Verbindungselements;
die Fig. 6 und 7 weitere Ausführungsformen des Verbindungselements der Erfindung mit einer integrierten Schraubplatte zur Verankerung an einem Fahrzeug in der Perspektivansicht und im Schnitt;

Fig. 8 eine weitere Ausführungsform mit integrierter Schraubplatte im Schnitt; und
die Fig. 9 und 10 noch eine alternative Ausführungsform des Verbindungselements mit einem integrierten Hakenprofil zur Verankerung an einem Fahrzeug in der Perspektivansicht und im Schnitt.

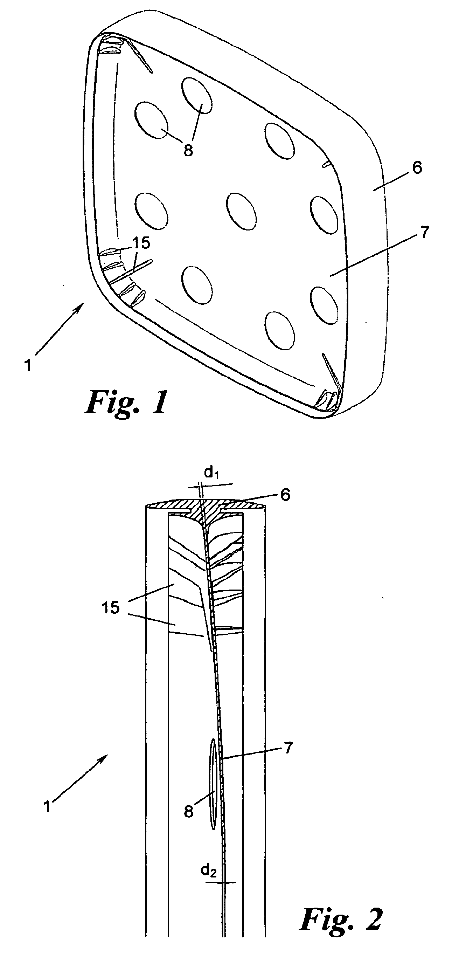

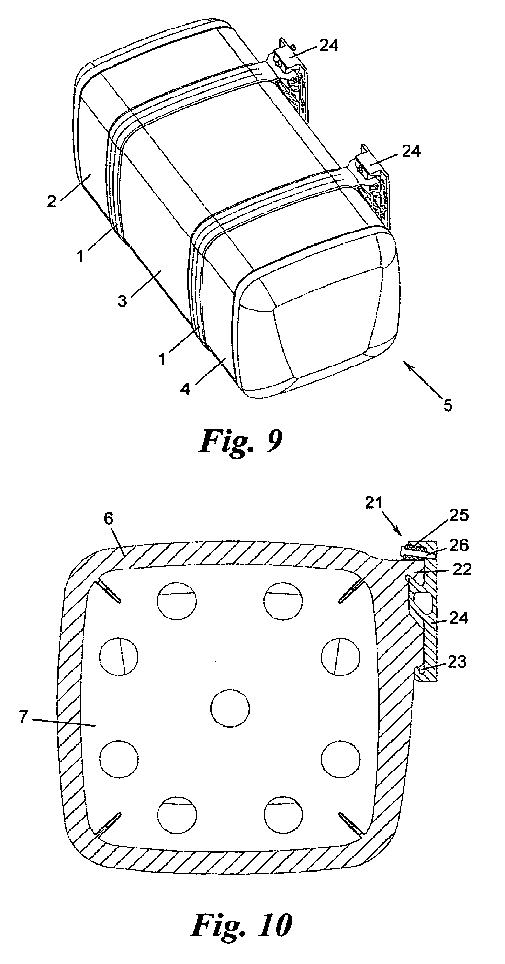

Die Fig. 1 bis 3 zeigen eine erste Ausführungsform eines Verbindungselements 1, das dazu dient, Mantelsegmente 2, 3, 4 eines aus diesen Segmenten zusammengesetzten Fahrzeugtanks 5 miteinander zu verbinden, siehe Fig. 9.

Das Verbindungselement 1 hat zu diesem Zweck einen etwa reifenförmigen Umfangsteil 6, in den ein zentraler Wandteil 7 mit Durchbrechungen 8 eingesetzt ist, um eine Schwallwand im Fahrzeugtank 5 zu bilden. Ohne Durchbrechungen 8 bildet das Verbindungselement keine Schwallwand, sondern eine Trennwand. Der Wandteil 7 kann auch zur Gänze entfallen, in welchem Fall sich das Verbindungselement 1 auf den Umfangsteil 6 reduziert.

Zumindest der Umfangsteil 6, optional auch der Wandteil 7, ist ein Guß-, Schmiede- oder Strangpreßteil, bevorzugt aus Aluminium.

Der Umfangsteil 6 ist auf seinen beiden Stirnseiten mit jeweils einer umlaufenden Nut 9 zum Einstecken jeweils eines Mantelsegmentes 2, 3 bzw. 4 versehen. Die Mantelsegmente 2 - 4 werden in die Nuten 9 eingepreßt, eingeschweißt, mittels Schrauben oder Stiften darin gesichert, oder bevorzugt eingeklebt.

Zumindest eine Seitenwand 10 jeder Nut 9 bietet in Nutmündungsrichtung jeweils einen fortschreitend lockereren Sitz für das jeweilige Mantelsegment 2 - 4, und zwar durch eine oder beide der folgenden Maßnahmen:
- die Wanddicke der bevorzugt radial außenliegenden Seitenwand 10 jeder Nut 9 nimmt in Nutmündungsrichtung fortschreitend ab; und/oder
- die bevorzugt radial außenliegende Seitenwand 10 jeder Nut 9 weicht in Nutmündungsrichtung fortschreitend zurück.

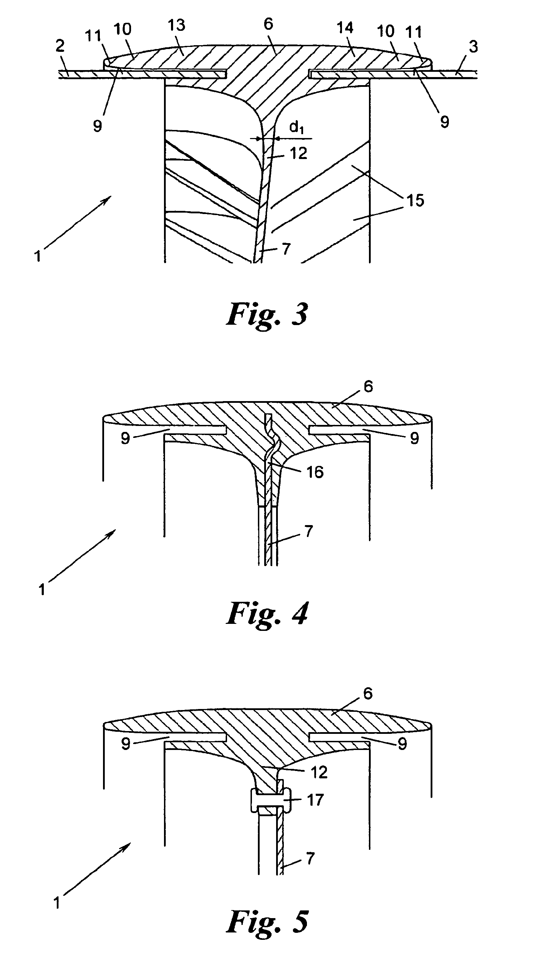

Dadurch können sich die in die Nuten 9 eingesteckten Mantelsegmente 2 - 4 mit fortschreitendem Abstand vom Boden der Nut 9 stärker bewegen, was übermäßige punktuelle Beanspruchungen am Übergang zwischen Verbindungselement 1 und Mantelsegment 2 - 4 vermeidet. Zusätzlich kann der Auslaufbereich 11 der Seitenwände 10 wie in Fig. 3 gezeigt abgerundet ausgebildet werden.

Die Nuten 9 können unterschiedliche Breite und/oder Tiefe haben, um Mantelsegmente unterschiedlicher Wandstärke aufnehmen zu können. Eine breitere Nut 9 hat bevorzugt auch eine entsprechend größere Tiefe.

Der Umfangsteil 6 des Verbindungselements 1 hat, wie der Schnitt von Fig. 3 zeigt, etwa T-Profil, wobei die Stegdicke d₁ des Mittelstegs 12 des T-Profils nach außen hin zunimmt und bevorzugt auch in die Schenkel 13, 14 des T-Profils rund ausläuft. Zusätzlich kann das T-Profil mit bevorzugt radialen Verstärkungsrippen 15 ausgesteift sein.

Der Wandteil 7 schließt an den Mittelsteg 12 des T-Profils des Umfangsteils 6 an, d.h. liegt mittig zum Umfangsteil. Bevorzugt nimmt auch die Wanddicke d₂ des Wandteils 7 nach innen hin ab. In Fig. 2 beträgt beispielsweise d₁ = 2,5 mm und d₂ = 2 mm.

Der Wandteil 7 kann mit dem Umfangsteil 6 einstückig ausgeführt sein, wie in der Ausführungsform der Fig. 1 bis 3, oder als gesonderter Teil gefertigt sein, wie die Fig. 4 und 5 zeigen.

In Fig. 4 ist der Außenbereich 16 des Wandteils 7 in den Umfangsteil 6 eingebettet, z.B. eingegossen, und in Fig. 5 ist der Wandteil 7 mit dem Mittelsteg 12 des Umfangsteils 6 vernietet (siehe Niete 17) oder alternativ verschraubt, verschweißt, verclincht oder verklebt.

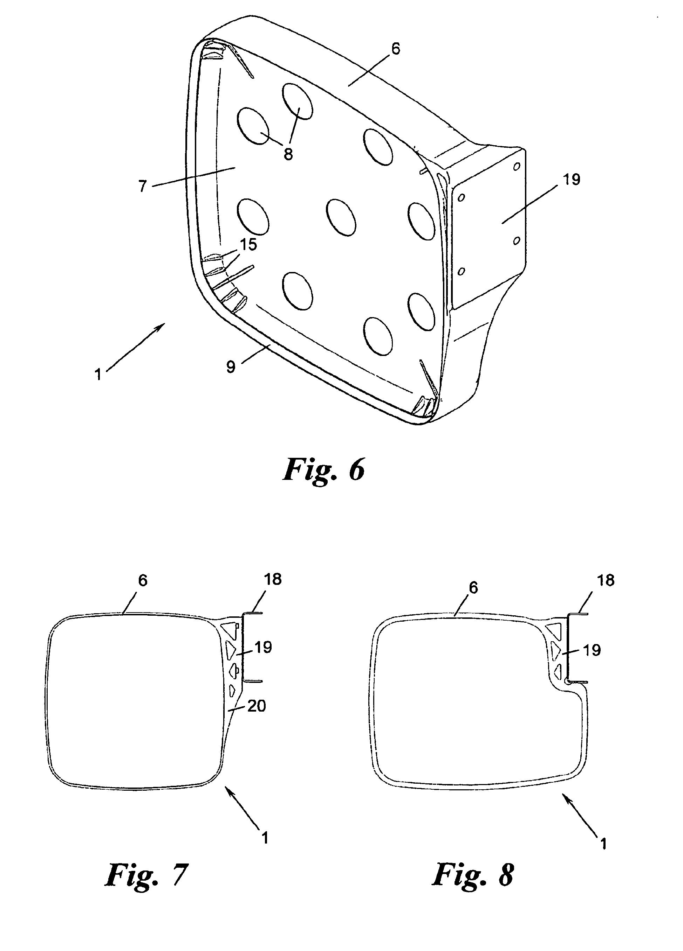

Die Fig. 6 und 7 zeigen eine alternative Ausführung des Verbindungselements 1, das nicht nur die Funktion einer Schwallwand hat, sondern gleichzeitig auch mit einer Verankerung zur Montage des Fahrzeugtanks 5 an einem Fahrzeugrahmen 18 ausgestattet ist. Die Verankerung ist hier eine einstückig an den Umfangsteil 6 angegossene Schraubplatte 19 zum Anschrauben an einen Fahrzeugrahmen. Ferner ist ersichtlich, daß die Verankerung, hier die Schraubplatte 19, über eine sich nach unten verjüngende Versteifungsrippe 20 am Umfangsteil 6 abgestützt ist, um eine gleichmäßige Krafteinleitung von der Halterung 19 zum Verbindungselement 1 und damit Fahrzeugtank 5 zu erreichen. Die Versteifungsrippe 20 kann ebenfalls einstückig mit dem Verbindungselement 1 und/oder der Halterung 19 ausgeführt sein.

Fig. 8 zeigt, daß das Verbindungselement 1 jede beliebige, an den entsprechenden Tank angepaßte Umfangskontur haben kann, im gezeigten Beispiel eine L-förmige Umfangskontur für einen L-förmigen Tank.

Bei der Ausführungsform der Fig. 9 und 10 ist die Verankerung ein einstückig an den Umfangsteil 6 angegossenes zweifaches Hakenprofil 21, das mittels zweier Haken 22, 23 in eine entsprechend komplementär ausgebildete Halterung 24 des Fahrzeugrahmens 18 einhängbar ist. Mittels eines Klemmblocks 25, der mit einer Schraube 26 an der Halterung 24 festlegbar ist, wird das Hakenprofil 21 in der Halterung 24 arretiert.

Die Erfindung ist nicht auf die dargestellten Ausführungsbeispiele beschränkt, sondern umfaßt alle Varianten und Modifikationen, die in den Rahmen der angeschlossenen Ansprüche fallen.

## Patentansprüche

1. Verbindungselement (1) für Mantelsegmente (2 - 4) eines Fahrzeugtanks (5), mit einem reifenförmigen Umfangsteil (6), **dadurch gekennzeichnet, daß** der Umfangsteil (6) auf beiden Stirnseiten mit jeweils einer umlaufenden Nut (9) zum Einstecken der Mantelsegmente (2 - 4) versehen ist, und daß zumindest eine Seitenwand (10) jeder Nut (9) in einen fortschreitend lockereren Sitz für ihr Mantelsegment (2 - 4) ausläuft.

2. Verbindungselement nach Anspruch 1, **dadurch gekennzeichnet, daß** die Wanddicke der radial außenliegenden Seitenwand (10) jeder Nut (9) zu ihrem Ende hin fortschreitend abnimmt.

3. Verbindungselement nach Anspruch 1 oder 2, **dadurch gekennzeichnet, daß** die radial außenliegende Seitenwand (10) jeder Nut (9) zu ihrem Ende hin fortschreitend zurückweicht.

4. Verbindungselement nach einem der Ansprüche 1 bis 3, **dadurch gekennzeichnet, daß** zumindest sein Umfangsteil (6) ein Guß-, Schmiede- oder Strangpreßteil ist, bevorzugt aus Aluminium.

5. Verbindungselement nach einem der Ansprüche 1 bis 4, **dadurch gekennzeichnet, daß** der Umfangsteil (6) im Schnitt gesehen etwa T-Profil hat.

6. Verbindungselement nach Anspruch 5, **dadurch gekennzeichnet, daß** die Stegdicke des Mittelstegs (12) des T-Profils nach außen hin zunimmt und in die Schenkel (13, 14) des T-Profils rund ausläuft.

7. Verbindungselement nach Anspruch 5 oder 6, **dadurch gekennzeichnet, daß** das T-Profil mit Verstärkungsrippen (15) ausgesteift ist.

8. Verbindungselement nach einem der Ansprüche 1 bis 7, **dadurch gekennzeichnet**, das das Verbindungselement (1) einen Wandteil (7) umfaßt, der in die zentrale Öffnung des Umfangsteils (6) eingesetzt ist.

9. Verbindungselement nach Anspruch 8 in Verbindung mit Anspruch 5, **dadurch gekennzeichnet, daß** der Wandteil (7) an den Mittelsteg (12) des T-Profils anschließt.

10. Verbindungselement nach Anspruch 8 oder 9, **dadurch gekennzeichnet, daß** die Wanddicke des Wandteils (7) nach innen hin abnimmt.

11. Verbindungselement nach einem der Ansprüche 8 bis 10, **dadurch gekennzeichnet, daß** der Wandteil (7) mit seinem Außenbereich (16) in den Umfangsteil (6) eingebettet oder mit dem Umfangsteil (6) vernietet, verschraubt, verschweißt, verclincht oder verklebt oder mit dem Umfangsteil (6) einstückig ist.

12. Verbindungselement nach einem der Ansprüche 8 bis 11, **dadurch gekennzeichnet, daß** es eine Schwallwand bildet und der Wandteil (7) und bevorzugt auch der Umfangsteil (6) mit Durchbrechungen (8) versehen sind.

13. Verbindungselement nach einem der Ansprüche 1 bis 12, **dadurch gekennzeichnet, daß** der Umfangsteil (6) an zumindest einer Stelle seines Außenumfangs mit einer Verankerung (19, 21) zur Montage an einem Fahrzeugrahmen (18) ausgestattet ist, welche bevorzugt eine einstückig angegossene Schraubplatte (19) oder ein einstückig angegossenes Hakenprofil (21) ist, das in ein komplementäre Halterung (24) des Fahrzeugrahmens (18) einhängbar ist.

14. Verbindungselement nach Ansprüche 13, **dadurch gekennzeichnet, daß** die Verankerung (19, 21) sich mittels einer nach unten verjüngten Versteifungsrippe (20) am Umfangsteil (6) abstützt.

15. Fahrzeugtank mit zumindest zwei Mantelsegmenten, **gekennzeichnet durch** zumindest ein Verbindungselement (1) nach einem der Ansprüche 1 bis 14, in dessen Nuten (9) die Mantelsegmente (2 - 4) eingesetzt sind, bevorzugt eingeschweißt oder eingeklebt.

## Claims

1. Connecting element (1) for shell segments (2-4) of a vehicle tank (5) with a hoop-shaped peripheral part (6), **characterized in that** the peripheral part (6) is respectively provided with a peripheral groove (9) for inserting the shell segments (2-4) on both faces, and **in that** at least one side wall (10) of each groove (9) tapers off into a progressively looser seat for its shell segment (2-4).

2. Connecting element according to Claim 1, **characterized in that** the wall thickness of the radially outer side wall (10) of each groove (9) progressively decreases toward its end.

3. Connecting element according to Claim 1 or 2, **characterized in that** the radially outer side wall (10) of each groove (9) progressively recedes toward its end.

4. Connecting element according to one of Claims 1-3, **characterized in that** at least its peripheral part (6) consists of a casting, a forging or an extrusion, preferably of aluminum.

5. Connecting element according to one of Claims 1-4, **characterized in that** the peripheral part (6) has, if viewed in the form of a section, approximately a T-profile.

6. Connecting element according to Claim 5, **characterized in that** the web thickness of the central web (12) of the T-profile increases outward and transforms into the limbs (13, 14) of the T-profile in a rounded fashion.

7. Connecting element according to Claim 5 or 6, **characterized in that** the T-profile is braced with reinforcing ribs (15).

8. Connecting element according to one of Claims 1-7, **characterized in that** the connecting element (1) comprises a wall part (7) that is inserted into the central opening of the peripheral part (6).

9. Connecting element according to Claim 8 in connection with Claim 5, **characterized in that** the wall part (7) abuts on the central web (12) of the T-profile.

10. Connecting element according to Claim 8 or 9, **characterized in that** the wall thickness of the wall part (7) decreases inward.

11. Connecting element according to one of Claims 8-10, **characterized in that** the wall part (7) is embedded in the peripheral part (6) with its outer region (16) or riveted, screwed, welded, clinched or bonded to the peripheral part (6) or realized integrally with the peripheral part (6).

12. Connecting element according to one of Claims 8-11, **characterized in that** it forms a baffle and the wall part (7) and preferably also the peripheral part (6) are provided with openings (8).

13. Connecting element according to one of Claims 1-12, **characterized in that** the peripheral part (6) is equipped with an anchoring arrangement (19, 21) for being mounted on a vehicle frame (18) on at least one point of its outer periphery, wherein said anchoring arrangement preferably is an integrally cast screw-on plate (19) or an integrally cast hook profile (21) that can be engaged with a complementary bracket (24) of the vehicle frame (18).

14. Connecting element according to Claim 13, **characterized in that** the anchoring arrangement (19, 21) is supported on the peripheral part (6) by means of a downwardly tapered reinforcing rib (20).

15. A vehicle tank with at least two shell segments, **characterized by** at least one connecting element (1) according to one of Claims 1-14, into the grooves (9) of which the shell segments (2-4) are inserted, preferably welded or bonded.

## Revendications

1. Élément de liaison (1) pour des segments d'enveloppe (2-4) d'un réservoir de véhicule automobile (5), comprenant une partie périphérique (6) de forme annulaire, **caractérisé en ce que** la partie périphérique (6) est pourvue sur ses deux côtés frontaux respectivement d'une gorge périphérique (9) pour engager les segments d'enveloppe (2-4), et **en ce qu'**au moins une paroi latérale (10) de chaque gorge (9) se termine avec un logement progressivement plus lâche pour son segment d'enveloppe (2-4).

2. Élément de liaison selon la revendication 1, **caractérisé en ce que** l'épaisseur de la paroi latérale extérieure (10) de chaque gorge (9) diminue progressivement en direction de son extrémité.

3. Élément de liaison selon la revendication 1 ou 2, **caractérisé en ce que** la paroi latérale extérieure (10) de chaque gorge (9) est progressivement en retrait en direction de son extrémité.

4. Élément de liaison selon l'une des revendications 1 à 3, **caractérisé en ce que** sa partie périphérique (6) au moins est une pièce de fonderie, de forge ou une pièce extrudée, de préférence en aluminium.

5. Élément de liaison selon l'une des revendications 1 à 4, **caractérisé en ce que** la partie périphérique (6) présente en coupe un profil approximativement en T.

6. Élément de liaison selon la revendication 5, **caractérisé en ce que** l'épaisseur du pied central (12) du profil en T augmente vers l'extérieur et se termine par un arrondi dans les branches (13, 14) du profil en T.

7. Élément de liaison selon les revendications 5 ou 6, **caractérisé en ce que** le profil en T est rigidifié par des nervures de renforcement (15).

8. Élément de liaison selon l'une des revendications 1 à 7, **caractérisé en ce que** l'élément de liaison (1) comprend une partie de paroi (7) qui est mise en place dans l'ouverture centrale de la partie périphérique (6).

9. Élément de liaison selon la revendication 8 en association avec la revendication 5, **caractérisé en ce que** la partie de paroi (7) se raccorde au pied central (12) du profil en T.

10. Élément de liaison selon la revendication 8 ou 9, **caractérisé en ce que** l'épaisseur de la partie de paroi (7) diminue en direction de l'intérieur.

11. Élément de liaison selon l'une des revendications 8 à 10, **caractérisé en ce que** la partie de paroi (7) est noyée avec sa zone extérieure (16) dans la partie périphérique (6) ou bien rivetée, vissée, soudée, agrafée ou collée avec la partie périphérique (6), ou est d'une seule pièce avec la partie périphérique (6).

12. Élément de liaison selon l'une des revendications 8 à 11, **caractérisé en ce qu'**il forme un brise-flot, et la partie de paroi (7) et de préférence également la partie périphérique (6) sont pourvues de perçages (8).

13. Élément de liaison selon l'une des revendications 1 à 12, **caractérisé en ce que** la partie périphérique (6) est équipée, à au moins un emplacement de sa périphérie extérieure, d'un ancrage (19, 21) pour le montage sur un châssis de véhicule (18), ledit ancrage étant de préférence une plaque à visser (19) coulée d'une seule pièce, ou un profil en crochet (21) coulé d'une seule pièce, qui peut être accroché dans une monture complémentaire (24) du châssis de véhicule (18).

14. Élément de liaison selon la revendication 13, **caractérisé en ce que** l'ancrage (19, 21) s'appuie sur la partie périphérique (6) au moyen d'une nervure de renforcement (20) qui va en se rétrécissant vers le bas.

15. Réservoir de véhicule automobile comprenant au moins deux segments d'enveloppe, **caractérisé par** au moins un élément de liaison (1) selon l'une des revendications 1 à 14, tels que les segments d'enveloppe (2-4) sont mis en place dans ses gorges (9), de préférence soudés ou collés.
